# EUROPEAN PATENT SPECIFICATION

(11) **EP 1 659 757 B1**
(45) Date of publication and mention of the grant of the patent: **27.03.2013**
(21) Application number: 06002190.4
(22) Date of filing: 22.06.2001
(51) Int. Cl.: H04L 29/06

(54) **Apparatus and methods for a client server system**
Vorrichtung und Verfahren für ein Client-Server-System
Dispositif et procédés pour un système client-serveur

(30) Priority: 30.06.2000 GB 0016256
(43) Date of publication of application: 24.05.2006
(62) Divisional of application: 01960361.2
(73) Proprietor: Nokia Corporation, 02150 Espoo (FI)
(72) Inventor: Sharp, Jonathan, Sunningdale Berkshire SL5 0BB (GB); Thomas, Graham, Camberley Surrey GU15 1QS (GB); Seligman, Kym, Wokingham Berkshire RG40 5PG (GB); Pneumaticos, George, Kingston upon Thames Surrey KT1 4BA (GB)
(74) Representative: Swindell & Pearson Limited

(56) References cited:
- US-A- 6 052 600

## Description

The present invention relates broadly to the fields of mobile phones and network technology, for example the Internet. The invention in addition extends to areas concerned with effecting transactions and e-commerce. More particularly, the present invention relates to client-server systems and the downloading of content for a portable radio communication device such as a mobile phone and services therefor. Linked to this, the present invention is concerned with systems, methods and apparatus for enabling the provision of content onto a portable radio communication device such as a mobile phone. In this context, embodiments of the present invention additionally concern the various parties/interests that enable and use such content. One such party is the provider of content, either directly through designing the content, or indirectly by acquiring the content. Such party is herein termed the content provider. Next, there is a party that makes the content available for use by others, in particular for use for instance on a mobile phone. Such party may be a mobile phone manufacturer, operator or distributor and herein is termed the content enabler. Then there is the user of the content who herein is termed the end user.

US 6052600 discloses a software programmable radio which receives information to configure a reconfigurable resource to perform an operation based on the information. A processor within the reconfigurable resource performs a software program in accordance with the operation, such as a waveform for communicating via a spread spectrum technique. The method includes the steps of checking for a valid license granted to the radio to determine when the radio is authorized for use in the network. A controller configures the radio to perform the operation based on the information.

The present invention is as set out in the independent claims.

The term content, in this context, broadly encompasses any form of data that is made available on a portable radio communication device and designed to engage an end user, for example media information, stock prices, weather reports, electronic games, e-commerce, as well as image related data which can be graphical or video and music and audio data.

In a specific implementation of the present invention, not claimed in independent claim form, content comprises electronic game data. In this context, the implementation provides for original games content, adaptation data, and adapted games content. Original games content comprises the game software required to characterise and allow play of the game in its original version. Thus original games content defines the look and feel of the game. Adaptation data comprises software defining for example additional levels of the original game, or further characters, or replenishments for the game. Adapted games content comprises the original game modified by the adaptation data.

Accordingly, in a preferred embodiment of the present invention, not claimed in independent claim form, original content is provided for storage on and use by a mobile phone by a content provider, and adaptation data for adapting the original content stored on a mobile phone is provided by the content provider and is made available for downloading onto the mobile phone from a server, wherein monitoring and accounting means monitor the downloading of the adaptation data from the server for computing a payment to be made to the content provider wherein the content provider is remunerated for the original content and the adaptation data substantially by said computed payments.

Other aspects and features of embodiments of the invention are defined in the appended claims.

By means of the invention, content may be downloaded from a server to a portable radio communication device and a computation is performed of the payment to be made in respect of the content (by the first party to the second party). It will be appreciated that in accordance with the invention, there is a transformation of data.

Embodiments of the present invention allow a measure of the popularity of content. For those users that do use the content, the present invention, in at least its preferred embodiments, allows the user to download new forms of the content (e.g. a new level or variation of the game) from a server of the mobile phone manufacturer. Since this downloading can be logged, the mobile phone manufacturer is able to make a payment to the content (e.g. game) provider in respect of the downloaded content, whilst being able to maintain control of game releases. In addition, the invention enables games designers to produce content for the mobile phone platform.

In this way, the content provider continues to design and develop more challenging and innovative versions of the game (e.g. in-game data, levels, etcs), whilst the user will continue to remain interested and engaged. Furthermore, the mobile phone manufacturer benefits in increased traffic and stimulating content for mobile phone manufacturer's internet site.

In order to aid a better understanding of the present invention, various embodiments of the invention will now be described. These should not be construed as necessarily limiting the invention but merely as examples of specific ways of putting the invention into effect. In particular, the invention will be described with reference to the accompanying drawings in which:
Figure 1 is a block diagram of a system in accordance with a preferred arrangement of the present invention;
Figure 2 is a schematic of client-server system in accordance with the system of Figure 1;
Figure 3 is a block diagram illustrating selected functional aspects of the client server system of Figure 2; and
Figure 4 is a flow chart outlining a preferred way of effecting downloading of content in the client-server system of Figure 2 and 3.

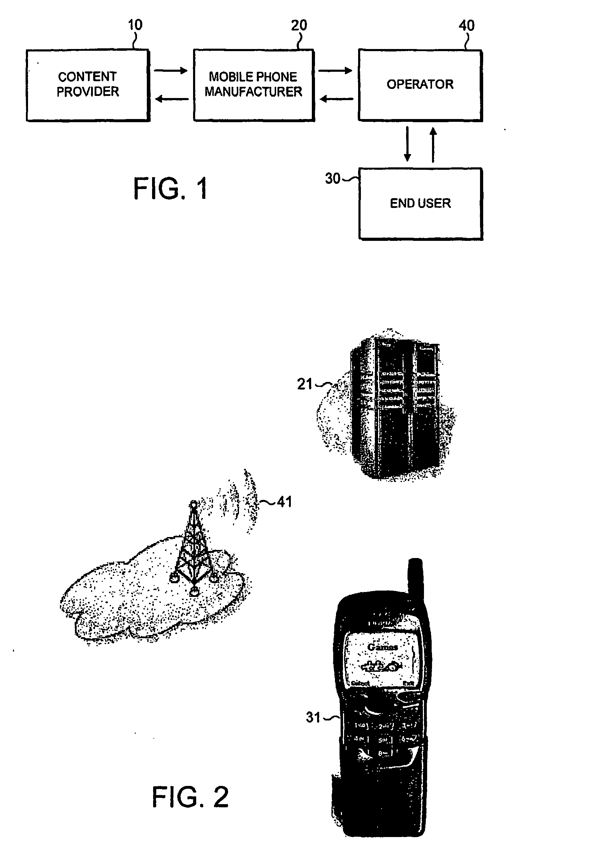

Figure 1 outlines one inter-relationship between a content provider 10, a content enabler 20, in this case the mobile phone manufacturer, and an end user 30. Also illustrated in Figure 1 is an operator or distributor 40 to whom the manufacturer supplies the mobile phone, and through whom the end user is provided with a wireless communication service.

As indicated previously, electronic games software is one example of content for a mobile phone platform, and in the following example reference will be made to games content, although the invention is in no way intended to be limited to games content.

The content provider is usually the party creating the content such as the design of a new electronic game that can be played on a mobile phone and this comprises the software for the original version of the game which sets out the look and feel of the game, for instance its characters, its objectives, its rules of operation. The original game typically contains in-game data which can be thought of as the games engine, in that it provides the instructions and routines for game play, for example by drawing on library functions that define how characters may interact during game play.

The content provider additionally creates adaptation data for the original game. Such adaptation data comprises new data for the inputting to the original game content in-game data for example different characters, replenishments of ammunition, etc. Adaptation data also comprises new in-game data that characterises new game play versions and variations, such as further levels, additional smart modes, etc. The adaptation data modifies the original game content to result in adapted games content. Each adapted games content has associated with it an identifier that identifies which adaptation data has been used in its construction.

Having designed and developed the original games content to a working model, the content provider (or an agent thereof) then makes an approach to a mobile phone manufacturer so as to enquire if the manufacturer is interested in putting the game on the manufacturer's phones.

In the alternative, it may be that the mobile phone manufacture has already commissioned the content provider to create and provide an electronic game.

Whilst the mobile phone manufacturer may be interested in providing the game on its mobile phone, it may be reluctant to pay a per unit royalty based on phone sales since the original games content may be regarded as an incidental to the value of the phone. In certain embodiments of the invention, there may be a one-off payment to or from the content provider allowing the use of the game on a mobile phone. Alternatively, there may be no initial payment in respect of this content. In either case, the content provider also makes available to the manufacturer adaptation data.

The mobile phone manufacturer may embed the original games content onto the phone during manufacture, or authorise downloading of the original games content onto the phone.

Referring to Figure 2, there is shown a server 21 onto which the mobile phone manufacturer loads the adaptation data, an end user's mobile phone 31 that is serviced by an operator network 41 and which contains the original games content. The adaptation data that is loaded and stored by the mobile phone manufacturer onto server 21 has a unique URL address. In this way, the adaptation data is available for downloading onto an end user's phone 31. Access to the server may be by methods known in the art via dial up numbers such as bulletin boards, and World-Wide-Web (WWW) addressing using URLs where the phone is WAP or iMODE enabled.

Access to the server is non standard in that the download of adaptation data is monitored and accounted. This may occur at the server or in the network. For example, at the server an account register records for each adaptation downloaded and provides for the accounting of the remuneration to the content provider. Alternatively, the operator may charge for access to the server for instance by use of a premium rate phone number to entry to a bulletin board, or by an monthly access charge to the server which may be divided equally between the parties or on a weighed a basis.

Turing to the end user, the end user buys a mobile phone 31 carrying the original games content, and is provided with a wireless communication service through the games operator network 41. The end user may begin playing the embedded game in either a stand-alone fashion or interactively with other user. After a number of plays of the game, the user will, in the majority of cases, become increasingly proficient at the game. After continued play, and depending on the skill and ability of the particular user, the end user will most probably master the game. At this stage, ordinarily the challenge of the game would fade and the user would lose interest in the game. However, by means of the preferred arrangement of the invention the user has the option to download from the mobile phone manufacturer's server 21 adaptation data so as to create a new and/or more difficult or different level. The end user accordingly requests the download of adaptation data from the server through the operator's network 41. If the request is approved the server 21 downloads the adaptation data to the end user's phone 31. The server or the network includes some form of monitoring and accounting apparatus that monitors the volume of downloads it is performing. A more detailed description of this process is given below.

It is on the basis of the monitored level of downloads of new-in game data that the mobile phone manufacturer, using the accounting means, computes the payment to be made to the content provider. Such payment could take any number of forms, for instance it may be a straight per download royalty rate.

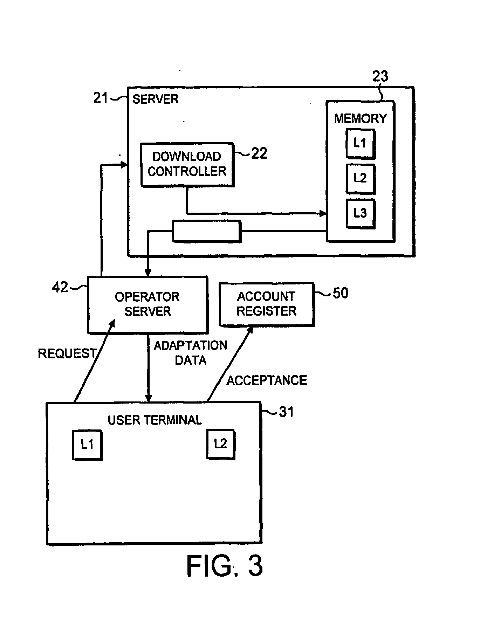

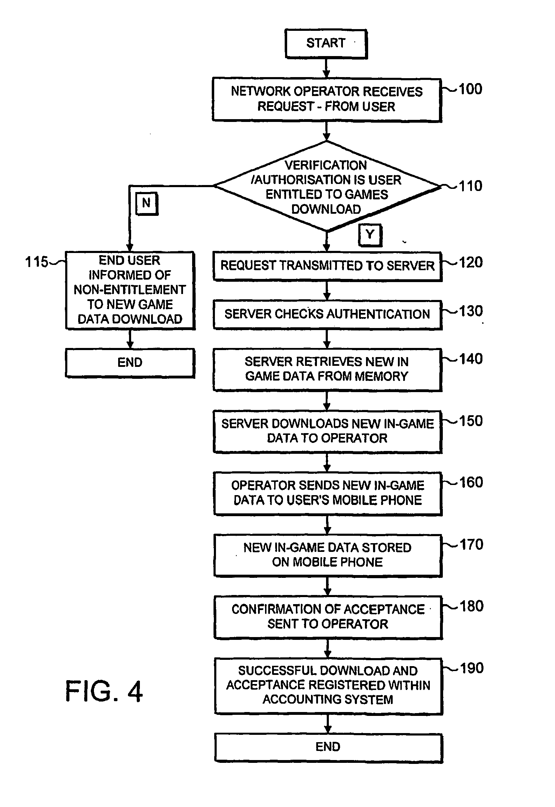

An illustration of a way by which content, for example games content, may be downloaded from a server onto a client terminal (such as a mobile phone) will now be given with reference to Figures 3 and 4.

Referring to Figure 3, there is shown in greater detail an end user mobile phone terminal 31 which through the operator network having an operator server 42 accesses a mobile phone manufacturer's server 21 having a memory containing adaptation data (L1, L2, L3). Figure 3 also shows an account register 50 which may be part of the operator server 42 or the mobile phone manufacturer's server 21.

An end user 30 that wishes to obtain adaptation data makes a request for the adaptation data through his mobile phone 31. The request may be a direct menu-driven option that the user clicks onto to send the request. The menu-driven option could be a direct link from the games menu option, which would save having to open for instance a browser application of the mobile phone. As another example, the games download option may appear automatically on the phone display at an appropriate point while a game is being played, such as for replenishments, or at the end of a game, for instance on successful completion of a particular level. The user in response decides whether or not to activate the download.

Thus a request is transmitted from the mobile phone for adaptation data. Typically, the request contains an identifier of the new adaptation data required for example by means of a tag indicating the latest version of the game currently stored or the user's mobile phone, that being either the original games content or the adapted games content.

The user's request is received first by the network operator at the operator server 42 having a gateway, this is indicated in Figure 4 at block 100. Here a series of checks is carried out in relation to the request in an authentication process. As indicated at block 110 in Figure 4, it is checked whether the user subscribes to the appropriate tariff to entitle him to have adaptation data downloaded to his mobile phone. Accordingly, the user's identity is checked along with his tariff subscription. If it is determined that the user is on the appropriate tariff the operator server forwards the request to the URL address identifying mobile phone manufacturer's server 21, as indicated at block 120.

If, on the other hand, the user is identified as not being a subscriber on the appropriate tariff to allow game downloads, flow passes to block 115 in which the operator server sends a message to the user denying him the request. At this juncture, the message may contain information informing the user of steps he may take in order to apply to subscribe to the correct tariff for obtaining adaptation data downloads.

Returning to the case where the network operator accepts the user and engages the manufacturer's server for the download, the request received at the server undergoes further authentication and identification at block 130, for instance to check for compatibility between the user and the game level requested on the basis of the level identifier tagged to the request.

Once accepted, the request is further processed in the server in a games download controller 22. The games download controller accesses the memory storage 23 holding the adaptation data using a memory address. From there the adaptation data is retrieved by the controller and placed in a buffer prior to transmission. Following appropriate checks the adaptation data software is transmitted according to block 150 to the operator server 42.

The operator server receives the adaptation data and verifies that it is the game version that has been requested. Following verification the operator server downloads the adaptation data software to the requesting user's mobile phone as indicated at block 160.

On receipt of the adaptation data at the mobile phone, a message is displayed on the phone's LCD indicating that adaptation data has arrived. The mobile phone's controller carries out a series of error checks to ensure that all the data has been faithfully received, if not then an error message is transmitted to the operator to re-send the adaptation data. If the error checks confirm complete error free receipt of the adaptation data the user may be afforded an opportunity to view the adaptation data in order to confirm that it is to his approval. The user then uses the menu options to accept and save the adaptation data onto the phone as indicated at block 170. Storing the adaptation data into the mobile phone memory modifies the previously stored games data for instance by overwriting library data or aspects of in-game data to provide adapted content thereby avoiding taking up substantially extra memory space.

The operation of saving the new in-game data software on the phone causes a signal to be transmitted to the operator that the game has been saved in the phone. This acts as a confirmation of receipt and acceptance by the user as at block 180.

Such confirmation of receipt and acceptance is passed to an accounting system 50 which registers this acceptance, and then performs computations to determine the charge to be made to the user, as indicated at block 190. The charge to the user for the adaptation data may be a fixed flat rate fee or on the basis of airtime, or by some other measure. The operator in turn reimburses the mobile phone manufacturer. For example, the operator server accounting system may send a signal to the manufacturer's server that a download of adaptation data has been successfully executed. This signal is then registered in some form of counting means provided in the server. Alternatively, the server could be equipped with counting means that monitors the volume of downloads that the server is performing. The counting means could be linked at the server to an accounting system that on the basis of the level of successful downloads from the server computes the payment to be made to the content provider. In this way, the content provider generates revenue for the original games content by receiving the payments for the downloads of adaptation data. Thus a substantial amount of the income of the games content taken as a whole is generated through remuneration from the adaptation data.

The present invention may be embodied in other specific forms without departing from its essential attributes. Reference should thus be made to the appended claims and other general statements herein rather than to the foregoing description as indicating the scope of invention.

For example, the user through a WAP browser on his phone may log on to the server through the network and navigate around the WAP site and make selections of adaptations for downloading from the site. In this arrangement, the user connects to a WAP server through the service provider into the WAP area where available content is located. The user is allowed to browse through the content before requesting the content he desires. This may be effected through 'pull' techniques in which the user is in control of the whole process. In this arrangement the server monitors the downloads and calculates the payment to be made to the content provider.

In a different arrangement, each time the content provider develops a new adaptation for a game, this is stored on the mobile phone manufacturer's server and sent to the operator who then unilaterally transmits the new level using 'push' techniques to those user's the network is aware of as having the original software loaded on his/her phone. The user then in response either accepts or rejects the new level. When accepted, the new level in this case does not overwrite the existing level, but is stored in addition to the existing level. The user accepting the new level also accumulates on the accounting system of the operator.

Furthermore, each feature disclosed in this specification (which terms includes the claims) and/or shown in the drawings may be incorporated in embodiments of the invention independently of other disclosed and/or illustrated features.

## Claims

1. A method comprising, at an apparatus (42):
transmitting adaptation data for adapting content for a user (30);
monitoring a volume of transmitted adaptation data;
receiving a signal confirming receipt and acceptance by the user (30) of the transmitted adaptation data; and
computing, after receiving the signal confirming receipt and acceptance by the user (30) of the transmitted adaptation data, payment dependent upon the volume of transmitted adaptation data.

2. A method as claimed in claim 1, wherein the adaptation data comprises software for modifying the content.

3. A method as claimed in claim 2, wherein the adaptation data is associated with an identifier.

4. A method as claimed in any preceding claim, wherein the content comprises any one of the following:
electronic game data;
media information;
stock prices;
weather reports;
video data; or
audio data.

5. A method as claimed in any preceding claim, further comprising, before transmitting adaptation data, identifying and authenticating the user (30) to determine whether the user (30) is allowed to access the adaptation data, and when it is determined that the user (30) is allowed to access the adaptation data, transmitting the adaptation data to the user (30).

6. A method as claimed in any preceding claim, wherein the signal confirming receipt and acceptance by the user (30) of the transmitted adaptation data indicates that the adaptation data has been successfully received.

7. A method as claimed in any preceding claim further comprising, at a device (31):
receiving the transmitted adaptation data,
adapting stored content using the received transmitted adaptation data;
transmitting a signal confirming receipt and acceptance by the user (30) of the received transmitted adaptation data.

8. A method as claimed in claim 7, further comprising, before receiving the transmitted adaptation data, transmitting a request for the adaptation data, wherein the request includes an identifier of the adaptation data.

9. An apparatus (42) comprising:
means configured to transmit adaptation data for adapting content for a user (30);
means configured to monitor a volume of the adaptation data transmitted to the user (30);
means configured to receive a signal confirming receipt and acceptance by the user (30) of the transmitted adaptation data; and
means (50) configured to compute, after receiving the signal confirming receipt and acceptance by the user (30) of the transmitted adaptation data,
payment dependent upon the volume of transmitted adaptation data.

10. An apparatus (42) as claimed in claim 9, wherein the adaptation data comprises software for modifying the content.

11. A system (42, 31) comprising:
an apparatus (42) as claimed in any one of previous claims 9 to 10; and
a device (31) comprising:
means configured to receive the transmitted adaptation data;
means configured to adapt stored content using the received transmitted adaptation data; and
means configured to transmit a signal confirming receipt and
acceptance of the transmitted adaptation data by a user (30).

12. A system (42, 31) as claimed in claim 11, wherein the device (31) is a portable radio communication device or a mobile phone.

13. A system (42, 31) as claimed in claim 11 or 12, wherein the apparatus is a server (42).

## Patentansprüche

1. Verfahren, das an einem Gerät (42) umfasst:
Senden von Anpassungsdaten, um einen Inhalt für einen Benutzer (30) anzupassen;
Beobachten einer Menge von gesendeten Anpassungsdaten;
Empfangen eines Signals, das den Empfang und die Annahme der gesendeten Anpassungsdaten durch den Benutzer (30) bestätigt; und
Berechnen einer Zahlung, die von der Menge der gesendeten Anpassungsdaten abhängt, nach dem Empfangen des Signals, das den Empfang und die Annahme der gesendeten Anpassungsdaten durch den Benutzer (30) bestätigt.

2. Verfahren gemäß Anspruch 1, wobei die Anpassungsdaten Software zum Modifizieren des Inhalts umfassen.

3. Verfahren gemäß Anspruch 2, wobei die Anpassungsdaten mit einer Kennung verknüpft sind.

4. Verfahren gemäß einem der vorstehenden Ansprüche, wobei der Inhalt eines der Folgenden umfasst:
Daten eines elektronischen Spiels;
Medieninformationen;
Börsenkurse;
Wettermeldungen;
Videodaten; oder
Audiodaten.

5. Verfahren gemäß einem der vorstehenden Ansprüche, weiter umfassend, vor dem Senden der Anpassungsdaten:
Identifizieren und Authentifizieren des Benutzers (30), um zu bestimmen, ob der Benutzer (30) auf die Anpassungsdaten zugreifen darf, und
Senden der Anpassungsdaten an den Benutzer (30), wenn bestimmt wurde, dass der Benutzer (30) auf die Anpassungsdaten zugreifen darf.

6. Verfahren gemäß einem der vorstehenden Ansprüche, wobei das Signal, das den Empfang und die Annahme der gesendeten Anpassungsdaten durch den Benutzer (30) bestätigt, angibt, dass die Anpassungsdaten erfolgreich empfangen wurden.

7. Verfahren gemäß einem der vorstehenden Ansprüche, weiter an einer Vorrichtung (31) umfassend:
Empfangen der gesendeten Anpassungsdaten,
Anpassen von gespeichertem Inhalt unter Verwendung der empfangenen Anpassungsdaten;
Senden eines Signals, das den Empfang und die Annahme der empfangenen Anpassungsdaten durch den Benutzer (30) bestätigt.

8. Verfahren gemäß Anspruch 7, weiter vor dem Empfangen der gesendeten Anpassungsdaten umfassend:
Senden einer Anforderung der Anpassungsdaten,
wobei die Anforderung eine Kennung der Anpassungsdaten einschließt.

9. Gerät (42), umfassend:
Mittel, konfiguriert, Anpassungsdaten zum Anpassen eines Inhalts für einen Benutzer (30) zu senden;
Mittel, konfiguriert, eine Menge der gesendeten Anpassungsdaten zu beobachten, die an den Benutzer (30) gesendet werden;
Mittel, konfiguriert, ein Signal zu empfangen, das den Empfang und
die Annahme der gesendeten Anpassungsdaten durch den Benutzer (30) bestätigt; und
Mittel (50), konfiguriert, nach dem Empfangen des Signals, das den Empfang und die Annahme der gesendeten Anpassungsdaten durch den Benutzer (30) bestätigt, eine Zahlung zu berechnen, die von der Menge der gesendeten Anpassungsdaten abhängt.

10. Gerät (42) gemäß Anspruch 9, wobei die Anpassungsdaten Software zum Ändern des Inhalts umfassen.

11. System (24, 31), umfassend:
ein Gerät (42) nach einem der Ansprüche 9 bis 10; und
eine Vorrichtung (31), umfassend:
Mittel, konfiguriert, die gesendeten Anpassungsdaten zu empfangen,
Mittel, konfiguriert, gespeicherten Inhalt unter Verwendung der empfangenen Anpassungsdaten anzupassen; und
Mittel, konfiguriert, ein Signal zu senden, das den Empfang und
die Annahme der empfangenen Anpassungsdaten durch einen Benutzer (30) bestätigt.

12. System (24, 31) gemäß Anspruch 11, wobei die Vorrichtung (31) eine tragbare Funkkommunikationsvorrichtung oder ein Mobiltelefon ist.

13. System (24, 31) gemäß Anspruch 11 oder 12, wobei das Gerät ein Server (42) ist.

## Revendications

1. Procédé comprenant, les étapes suivantes au niveau d'un appareil (42) :
la transmission de données d'adaptation destinées à adapter un contenu pour un utilisateur (30) ;
la surveillance d'un volume de données d'adaptation transmises ;
la réception d'un signal confirmant la réception et l'acceptation, par l'utilisateur (30), des données d'adaptation transmises ; et
le calcul, suite à la réception du signal confirmant la réception et l'acceptation, par l'utilisateur (30), des données d'adaptation transmises, d'un paiement dépendant du volume de données d'adaptation transmises.

2. Procédé selon la revendication 1, dans lequel les données d'adaptation comportent des données de logiciel permettant de modifier le contenu.

3. Procédé selon la revendication 2, dans lequel les données d'adaptation sont associées à un identifiant.

4. Procédé selon l'une quelconque des revendications précédentes, dans lequel le contenu comprend l'un quelconque des éléments suivants :
des données de jeux électroniques ;
des informations multimédias ;
des cours de bourse ;
des bulletins météorologiques ;
des données vidéo ; ou
des données audio.

5. Procédé selon l'une quelconque des revendications précédentes, comprenant en outre, préalablement à la transmission des données d'adaptation, l'identification et l'authentification de l'utilisateur (30), en vue de déterminer si l'utilisateur (30) est autorisé à accéder aux données d'adaptation, et lorsqu'il est déterminé que l'utilisateur (30) est autorisé à accéder aux données d'adaptation, la transmission des données d'adaptation à l'utilisateur (30).

6. Procédé selon l'une quelconque des revendications précédentes, dans lequel le signal confirmant la réception et l'acceptation, par l'utilisateur (30), des données d'adaptation transmises, indique que les données d'adaptation ont été reçues avec succès.

7. Procédé selon l'une quelconque des revendications précédentes, comprenant en outre les étapes suivantes, au niveau d'un dispositif (31) :
la réception des données d'adaptation transmises ;
l'adaptation du contenu stocké en utilisant les données d'adaptation transmises reçues ;
la transmission d'un signal confirmant la réception et l'acceptation, par l'utilisateur (30), des données d'adaptation transmises reçues.

8. Procédé selon la revendication 7, comprenant en outre, préalablement à la réception des données d'adaptation transmises, la transmission d'une demande pour les données d'adaptation, dans lequel la demande inclut un identifiant des données d'adaptation.

9. Appareil (42) comprenant :
un moyen configuré de manière à transmettre des données d'adaptation destinées à adapter un contenu pour un utilisateur (30) ;
un moyen configuré de manière à surveiller un volume des données d'adaptation transmises à l'utilisateur (30) ;
un moyen configuré de manière à recevoir un signal confirmant la réception et l'acceptation, par l'utilisateur (30), des données d'adaptation transmises ; et
un moyen (50) configuré de manière à calculer, suite à la réception du signal confirmant la réception et l'acceptation, par l'utilisateur (30), des données d'adaptation transmises, un paiement dépendant du volume de données d'adaptation transmises.

10. Appareil (42) selon la revendication 9, dans lequel les données d'adaptation comportent des données de logiciel permettant de modifier le contenu.

11. Système (42, 31), comprenant :
un appareil (42) selon l'une quelconque des revendications 9 à 10 ; et
un dispositif (31) comprenant :
un moyen configuré de manière à recevoir les données d'adaptation transmises ;
un moyen configuré de manière à adapter le contenu stocké, en utilisant les données d'adaptation transmises reçues ; et
un moyen configuré de manière à transmettre un signal confirmant la réception et l'acceptation, par un utilisateur (30),
des données d'adaptation transmises.

12. Système (42, 31) selon la revendication 11, dans lequel le dispositif (31) est un dispositif de communication radio portable ou un téléphone mobile.

13. Système (42, 31) selon la revendication 11 ou 12, dans lequel l'appareil est un serveur (42).
